# EUROPEAN PATENT SPECIFICATION

(11) **EP 1 286 786 B1**
(45) Date of publication and mention of the grant of the patent: **12.01.2005**
(21) Application number: 01936750.7
(22) Date of filing: 31.05.2001
(51) Int. Cl.: B05C 17/00

(54) **APPLICATOR PACKS FOR USE WITH SPREADABLE ADHESIVE COMPOSITIONS**
AUFTRAGSVORRICHTUNG ZUR VERWENDUNG MIT SCHMIERBARER KUNSTSTOFFZUSAMMENSETZUNG
APPLICATEURS POUR ETALAGE DE COMPOSITIONS ADHESIVES

(30) Priority: 01.06.2000 IE 000445
(43) Date of publication of application: 05.03.2003
(73) Proprietor: Loctite (R & D) Limited, Tallaght, Dublin 24 (IE)
(72) Inventor: O'DWYER, Liam P., Celbridge, Co. Kildare (IE); DOHERTY, Michael Anthony, Foxford, Co. Mayo (IE); RUSHE, Peter, Celbridge, Co. Kildare (IE); TIERNEY, Fergal W., Garristown, Co. Dublin (IE)
(74) Representative: Lane, Cathal Michael
(86) International application number: PCT/IE2001/000073
(87) International publication number: WO 2001/091915

(56) References cited:
- EP-A- 0 922 645
- DE-A- 1 928 880
- GB-A- 733 653
- US-A- 1 374 236
- US-A- 3 756 732
- US-A- 4 035 090
- US-A- 4 548 524
- US-A- 5 025 942
- PATENT ABSTRACTS OF JAPAN vol. 1999, no. 03, 31 March 1999 (1999-03-31) & JP 10 337523 A (TOAGOSEI CO LTD), 22 December 1998 (1998-12-22) cited in the application

## Description

### Field of the Invention

This invention relates to applicator packs for use in spreading adhesive compositions onto substrates.

### Brief Description of Related Technology

Conventional water-based adhesive compositions are commercially available in "glue-stick" packaging exemplified by the products sold under the trade name PrittStick™ by Henkel KGaA. Such packaging generally comprises a cylinder having an open mouth and a delivery mechanism which is operable to push the adhesive composition in the direction of the mouth. Adhesive at the mouth can be spread in bands across a substrate. The adhesive composition is sufficiently cohesive and elastic so that it retains a cylindrical shape as it is expelled from the mouth, it does not spill from the container and it can be retracted back into the container by reversing the delivery mechanism.

However the curing of water-based adhesive compositions involves separation of water from the composition, which is relatively slow and which is generally only practical on a porous substrate such as paper or wood.

It is well known that alpha-cyanoacrylate (CA) adhesive compositions cure very rapidly and can be used on a variety of substrates. However CA compositions are generally applied in drops of low-viscosity liquid composition for adhesion at particular spot locations. No CA composition is believed to be commercially available in a suitable formulation and dispenser for spreading on a substrate. There is a need for a pack which can apply such compositions.

There have been proposals for high-viscosity CA compositions. U.S. Patent No. 4,533,422 (Litke) refers to a variety of thickened CA adhesive compositions which incorporate organic polymers and/or inorganic fillers to reduce adhesive migration. The Litke patent describes CA compositions which employ fumed silicas treated with a polydimethylsiloxane or a trialkoxyalkylsilane as a thixotropic additive. A preferred embodiment of the Litke invention is a CA monomer formulation in the form of a non-flowable gel i.e. one which will not move when extruded onto a vertical glass plate as a ⅛ inch (3 mm) diameter bead. See also US Patent No. 4,837,260 (Sato).

Other CA adhesive compositions with high thixotropy or in the form of a gel are described in abstracts from Derwent Information Limited: AN 90-073066 (JP 02028275 A); AN 90-213265 (JP 02142875 A); AN 89-160464 (JP 01101383 A); AN 88-201308 (JP 63137979 A); AN 88-332263 (GB 2204872 A); AN 96-021903 (EP 686681A); AN 94-186513 (JP 06122853 A, US Patent No. 5, 373, 035); AN 92-255781 (JP 04173884 A); AN 87-015809 (EP 209067 A); AN 86-241051 (JP 61168679 A); and also EP 669386 A.

Containers having porous spreaders or delivery heads are also described in US Patent No. 3,756,732 (Stoffler), DE 1 928 880 (Gassenmaier) and US Patent No.4,035,090 (Bavaveas). Again such containers are not suited for use with the type of compositions proposed for use with the present invention such as for example curable compositions.

US Patent No. 1,374,236 (Ritz) describes a dispensing cap for a bottle which is described as a combined container and liquid spreader.

The Abstract for Japanese publication no. 10337523 (Toagosei Co. Ltd) describes a pen applicator for instant adhesive. The nozzle through which the material is dispensed is suited for use with relatively low viscosity products and is not suited for use with viscous products.

US Patent No. 4,548,524 (Seager) discloses a package for dispensing flowable materials such as powders and in particular cosmetics. The lid of the package when being removed creates a suction which sucks product through a siphon tube from a container through a dispense opening. The siphon tube extends from the dosed end (head) of the container to a position proximate the base of the container. The provision of a siphon tube is essential to ensure the siphon tube has one end in at all times so that they may be completely emptied from the container.

US Patent No. 5,025,942 (Lucas) describes a mechanism for locking a dispensing accessory to a container.

The hooking device comprises an inside sleeve delimiting superimposed snap rings beaten-in by force between helicoidal threads of the screw ring of the container.

GB Patent No. 733,653 (Frostick) discloses dispensers for viscous liquids such as gum whereby the gum can be dispensed in controlled amounts. The gum dispenser comprises a bottle formed with a resilient side wall, and an externally threaded neck which is plugged except for a small aperture and to which a cap may be threaded. The gum may be dispensed through the aperture by pressure on the wall of the container and controlling the pressure on the walls can control the amount dispensed. The patent further describes a plug with an aperture for insertion in the mouth of a container for application of product. A cap is also provided for the container. It is thought that adhesion of the cap to the container will occur unless the product is allowed to dry in which case the aperture may become clogged with dried gum.

None of the above documents disclose packs with applicators suitable for use with viscous adhesive products. The products the devices are described for use with are low viscosity products and in particular generally liquids. Furthermore the problem of contamination of the device with curable products is for the most part not discussed.

There is a need for a pack system comprising both a composition and an applicator which will allow a viscous CA composition to be spread as a thin film on a substrate. In an unrelated field of technology, WO 98/04236 describes an apparatus for delivering an antiperspirant or deodorant composition formulated with a viscosity of about 12,000 to 50,000 cP (mPa.s), said apparatus having a porous dome through which the composition is delivered. However a porous delivery head would not be useful for a reactive adhesive composition which would be likely to set in the pores and block them.

### Summary of the Invention

The present invention provides a pack which comprises a container holding a viscous adhesive product and an applicator for dispensing a viscous adhesive composition onto a substrate from a container, said applicator having a body with a closed head, a sealable valveless dispensing aperture penetrating the head, conduit or delivery means to supply the adhesive composition to the dispensing aperture, a wide non-porous spreading surface on the exterior of the head around the dispensing aperture, means for inhibiting flow of adhesive compositions along the exterior of the applicator. The pack of the invention is suited to use with viscous products and in particular (viscous) curable products.

Desirably the dispensing aperture is valveless. Maintaining the dispensing aperture without a valve is important as with curable products, especially viscous ones, the likelihood of valve mechanisms clogging is quite high.

The conduct or delivery means is desirably not a siphon conduit. A siphon conduit would link the contents from a container in most instances. However in the present invention viscous products are dispensed. Viscous products are not easily siphoned (for example by the mechanism of the Seagar patent described above) and are likely to remain undispensed or dispensed to a less than required degree. Furthermore as with valve mechanisms, it is likely that fouling of the siphon conduit with cured product may occur so that dispensing will not operate satisfactorily.

The means for inhibiting the flow of product along the exterior of the applicator is desirably a formation such as a step on the applicator. The applicator may be fitted with a cap and therefore it is desired that the inhibition means is provided between the spreading surface and the point at which the cap mates with the applicator (to retain the cap in place on the applicator). In other words, the inter-engagement means between the applicator and the cap are protected from fouling by the provision of the flow inhibitor.

The means for inhibiting flow of adhesive compositions along the exterior of the applicator step or other formation is positioned between the head of the applicator and that part of the applicator to which the cap attaches.

The pack provides a novel way of dispensing adhesives, particularly cyanoacrylate adhesives. It provides the user with a clean, convenient way of using CA adhesive over large areas while at least minimising, if not eliminating, the chance of spill. In particular, the adhesive can be applied easily to flat surfaces in an even film. The applicator combines the user-friendliness of a glue-stick with the speed and versatility of a cyanoacrylate adhesive.

Desirably, the applicator is a manual applicator. There is suitably a single dispensing aperture, located centrally in the spreading surface. However it is possible to use several dispensing apertures, e.g. 2-10, suitably 2-5 apertures, located at spaced locations on the spreading surface, provided that each of the apertures is sealable. A substantial number of apertures or interconnecting pores will not be practical if the adhesive composition is reactive.

The spreading surface is wide relative to the dispensing aperture which it surrounds and is suitable for applying a film of adhesive composition to a wide area of the substrate. The dispensing aperture may suitably have a width (e.g. diameter) of 0.5 mm - 5 mm, particularly 1 - 3 mm. The spreading surface may suitably have a width (e.g. diameter) of 10 - 50 mm, particularly 15-30 mm. The width of the aperture may suitably amount to 2 - 30% of the maximum width of the spreading surface.

In one arrangement, the head may be substantially circular in cross-section so that the spreading surface is also substantially circular. However it is possible to use other shapes e.g. oval or rectangular, in which case the "maximum width" referred to above means the long axis or diagonal measurement, respectively.

The spreading surface may be generally planar or flat. However when a rapid-setting adhesive is applied on a flat substrate using a flat spreading surface, there may be a risk of the applicator sticking to the substrate.

Alternatively, the spreading surface is convexly curved, arc-shaped or dome-shaped. A dome-shape is a portion of a sphere. The curved or dome-shaped spreading surface may suitably have a radius in the range from 20 - 100 mm, more particularly 65 - 90 mm, although the radius may be infinite, in which case the spreading surface is flat. The advantage of a curved or dome-shaped spreading surface is that only a restricted area contacts the substrate so that the risk of sticking is minimised and the adhesive is easier to spread as there is less surface-to-surface friction.

Desirably, the head has a comer with a small radius from that of the spreading surface e.g. 05 - 5 mm especially 1 - 2 mm at the perimeter of the spreading surface. Desirably the comer is curved. This is particularly desirable when the spreading surface is flat, so that the applicator can easily be tilted to a slightly inclined disposition relative to the substrate. In one embodiment the comer in question runs from the head toward the body, in other words downwardly along the applicator. For ease of use the comer may run about the entire perimeter of the spreading surface. Additionally or alternatively the comer may be formed by the convergence of two edges (not necessarily straight edges) of the spreading surface. In this latter arrangement movement from one side of the comer will usually involve travel about a longitudinal axis of the applicator. The sides of the comer run about the (side(s)) of the applicator as compared to the sides of the comer above which generally run along the body of the applicator (top to bottom). In the first arrangement the longitudinal axis of the apex of the comer is generally substantially parallel to a longitudinal axis of the head while in the second arrangement it is generally perpendicular to a longitudinal axis of the head.

In this latter arrangement it is desirable that the comer is formed in the body of the applicator also. In this arrangement it is not only the spreading surface which has the comer but also the body. In other words the two converging sides of the comer extend into the body of the applicator so that the apex of the comer extends from the head along the body. The spreading surface will usually be formed by a third side of the comer portion which (closes) runs between the two converging sides.

The comer may be a projecting portion for example as a generally triangular or v-shape (optionally with a rounded apex) which protrudes from the head of the applicator. It may also be formed by the applicator or spreading surface having any selected shape with a comer e.g. a rectangle or wedge-shaped.

The invention also provides a pack as described above in combination with a cap which fits over the head and which has a structure inside the cap for engaging the dispensing aperture so as to seal the aperture. Suitably the cap has a flat external surface area, so that the cap and applicator can stand in an inverted position. The invention also provides an applicator for dispensing a viscous adhesive composition onto a substrate, said applicator having a closed head, a sealable dispensing aperture penetrating the head, a wide spreading surface on the exterior of the head around the dispensing aperture, and conduit or delivery means to supply the adhesive composition to the dispensing aperture, or an applicator as described above in combination with a container holding a viscous adhesive composition.

Desirably, the applicator and container have complementary engagement means on the applicator and the container respectively. Suitably, the applicator has cutting means for piercing a closure on the container during the course of relative movement of the engagement means towards complete interengagement e.g. during screw-thread engagement.

In a particular aspect the invention provides a pack comprising an applicator and container as described above wherein the container holds an alpha-cyanoacrylate adhesive composition. The container may suitably be a tube, eg. of flexible metal such as aluminium, or of plastics. Alternatively, the container may be a rigid or semi-rigid container having a mechanism therein for delivering the adhesive composition e.g. a container of the glue-stick type.

Suitably, the adhesive composition has a Casson Infinite Shear Viscosity of at least 300 mPa.s, particularly in the range 300 - 50,000 mPa.s, especially 300 - 20,000 mPa.s, and a Yield Point in the range 1-20 Pa. Casson Viscosity is a computed estimate of viscosity at infinite shear. Yield Point is a measure of the force initially required to get the material to flow. Both parameters are measured by methods well known to those skilled in the art. Desirably, the adhesive composition is a gel. In a further feature of the invention, the adhesive composition includes an odour mask.

Desirably, the cap has a slide-fit, snap-fit or screw-thread engagement with the applicator. Suitably the engagement between the cap and applicator also provides a seal, particularly against the ingress of moisture. Except in the region of inter-fitting engagement and at the sealing pin, the cap is spaced from the applicator.

The pack of the present invention may be utilised to dispense gel cyanoacrylate compositions solidified in a desired geometric form, with the proviso that the use as a gelling agenf of a condensation product of an aldehyde or ketone with a polyol is not included within the scope of this invention. To be suitable for use in a glue-stick type of package an adhesive composition should desirably have a Casson Viscosity of at least 4,000 mPa.s and a Yield Point of at least 4 Pa.

According to one feature, the invention provides a pack containing a spreadable non-flowable cyanoacrylate adhesive composition which contains an odour masking ingredient compatible with the composition. This is particularly advantageous for a composition intended to be spread by a manual applicator, because the odour of a cyanoacrylate adhesive can be unpleasant to some users. Non-aqueous compositions are among those which are useful in consideration of the present invention.

The present invention may relate to a pack holding a viscous adhesive composition such as a spreadable non-flowable adhesive composition consisting essentially of:
(i) an alpha-cyanoacrylate ester monomer in an amount of 70-85% by weight;
(ii) one or more fillers in a total amount of 10-25% by weight;
(iii) other components of a cyanoacrylate adhesive composition, to a total of 100% by weight; or
a composition consisting essentially of:
(i) an alpha-cyanoacrylate ester monomer in an amount of 75-85% by weight;
(ii) one or more fillers in a total amount of 10-15% by weight;
(ii) a plasticiser in an amount of 10-15 % by weight;
(iv) other components of a cyanoacrylate adhesive composition, to a total of 100% by weight; or
a composition consisting essentially of:
(i) an alpha-cyanoacrylate ester monomer in an amount of 70-80% by weight;
(ii) one or more fillers in a total amount of 15-30% by weight;
(iii) other components of a cyanoacrylate adhesive composition, to a total of 100% by weight.

The term "non-flowable" is used herein generally in accordance with the definition in the Litke patent cited above.

One of the significant achievements of the present invention is the ability to apply a CA adhesive as a film over a substantial area of a substrate. A conventional CA composition exposed as a thin film in this way would be likely to dry out before the two substrates are brought together. It is desirable therefore to tailor the reactivity of the CA compositions of the invention to maximise the useable time on the substrate. In general this may be achieved by increasing the content of inhibitors compared to conventional compositions, so that the compositions have extended "drying time" e.g. at least 15 minutes.

### Description of the Drawings

Figure 1 is a series of views of one embodiment of an applicator of a pack aocording to the invention, with a cap in place on it;
   Figure 1(a) is an elevation of the applicator and cap;
   Figure 1(b) is a vertical cross section on the line X-X in Figure 1(a);
   Figure 1(c) is a top plan view;
   Figure 1(d) is a perspective view from above and the side;
   Figure 1(e) is a perspective view from below and the side;
   Figure 1(f) is a side elevation of the applicator combined with a tube;
   Figure 1(g) is a section on the line X-X in Figure 1(f).
Figure 2 is a series of views of a second embodiment of the applicator, shown with the cap removed;
   Figure 2(a) is an elevation of the applicator;
   Figure 2(b) is a vertical cross section on the line X-X in Figure 2(a);
   Figure 2(c) is a top plan view;
   Figure 2(d) is a perspective view from above and the side;
   Figure 2(e) is a vertical cross section of a cap for use with the second embodiment.
Figure 3 is a series of views of an applicator of a pack according to the invention mounted on a large-size tube;
   Figure 3(a) is a front elevation;
   Figure 3(b) is a side elevation;
   Figure 3(c) is a perspective view from above and the front.
Figure 4 is a corresponding series of views of an applicator mounted on a medium size tube;
   Figure 4(a) is a front elevation;
   Figure 4(b) is a side elevation;
   Figure 4(c) is a top plan view
   Figure 4(d) is a perspective view from above and the front.
Figure 5 is a series of views corresponding to those of Figure 4, showing an applicator mounted on a small-size tube.
Figure 6 is a series of views corresponding to those of Figure 4, showing an applicator of a pack according to the invention with a tear band, mounted on a large-size tube.
Figure 7 is a series of views corresponding to those of Figure 4, showing an alternative embodiment of an applicator with a generally plane spreading surface.
Figure 8 is a series of views corresponding to those of Figure 3, showing a further alternative embodiment of an applicator having an inclined surface.
Figure 9 comprises enlarged fragmentary views of two alternative structures on the cap for sealing the dispensing aperture of an applicator of a pack acoording to the invention;
   Figure 9(a) shows a pin-type seal;
   Figure 9(b) shows a wedge-type seal.
Figure 10 comprises two diagrammatic cross sections of an alternative dispensing system having the applicator integrated into a container with a screw-and-plunger delivery mechanism;
   Figure 10(a) shows the arrangement before adhesive is dispensed;
   Figure 10(b) shows the arrangement when most of the adhesive has been dispensed.
Figure 11 comprises three diagrammatic elevations of a further alternative dispensing system having the applicator integrated into a container having a sliding piston delivery mechanism;
   Figure 11(a) is a front view showing the arrangement before adhesive is dispensed;
   Figure 11 (b) is a front view showing the arrangement after most of the adhesive has been dispensed;

   Figure 11(c) is a side view showing the arrangement in the position of Figure 11(b).
Figure 12 shows four views of an alternatively shaped applicator of a pack of the invention
   wherein:
   Figure 12(a) is a side elevational view of the applicator;
   Figure 12(b) is a front elevational view thereof;
   Figure 12(c) is a top plan view thereof;
   Figure 12(d) is a perspective view thereof.
Figure 13 shows a further alternative applicator
   wherein:
   Figure 13(a) is a top plan view of the alternative applicator and
   Figure 13(b) is a perspective view thereof.
Figure 14 shows a yet further alternative applicator
   wherein:
   Figure 14(a) is a top plan view of the alternative applicator and
   Figure 14(b) is a perspective view thereof..

### Detailed Description of the Invention

The α-cyanoacrylate-type adhesive compositions which may be provided with a pack of the invention include those containing an α-cyanoacrylate monomer of the formula: 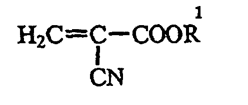 where R¹ represents a straight chain or branched chain alkyl group having 1 to 12 carbon atoms (which may be substituted with a substituent such as a halogen atom or an alkoxy group), a straight chain or branched chain alkenyl group having 2 to 12 carbon atoms, a straight chain or branched chain alkynyl group having 2 to 12 carbon atoms, a cycloalkyl group, an aralkyl group or any aryl group. Specific examples of the groups for R¹ are a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl group, a cresyl group, a 2-chloroethyl group, a 3-chloropropyl group, a 2-chlorobutyl group, a trifluoroethyl group, a 2-methoxyethyl group, a 3-methoxybutyl group and a 2-ethoxyethyl group. Ethyl cyanoacrylate is the preferred monomer for use in the inventive compositions.

A single α-cyanoacrylate monomer or a mixture of two or more of these α-cyanoacrylate monomers can be used. Generally, the above α-cyanoacrylate monomer alone is not sufficient as an adhesive, and the components set forth below are sometimes added:
1) an accelerator
2) an anionic polymerization inhibitor
3) a radical polymerization inhibitor
4) a thickener
5) special additives such as plasticizers, heat stabilizers and toughening agents,
6) perfumes, dyes, pigments, etc.

A suitable amount of α-cyanoacrylate monomer present in the adhesive composition is about 50 to 99.5% by weight, preferably 60 to 90% by weight, based on the total weight of the adhesive composition.

An anionic polymerization inhibitor is generally added to the α-cyanocrylate-type adhesive composition, eg., in an amount of about 0.0001 to 10% by weight based on the total weight of the adhesive composition, to increase the stability of the adhesive composition during storage, and examples of known inhibitors are sulfur dioxide, aromatic sulfonic acids, aliphatic sulfonic acids, sulfones, and carbon dioxide. The amount of inhibitor will suitably be greater than in conventional CA adhesive compositions, in order to slow down cure of the composition.

Suitable examples of radical polymerization inhibitors include, for example, hydroquinone and hydroquinone monomethyl ether. A radical polymerization inhibitor is added, e.g., in an amount of about 0.001 to 2.0% by weight, particularly 0.03 to 0.5% by weight, based on the total weight of the adhesive composition, for the purpose of capturing radicals which are formed by light during storage.

A thickener is added to increase the viscosity of the α-cyanoacrylate-type adhesive composition. Various polymers can be used as thickeners, and examples include poly(methyl methacrylate), methacrylate-type copolymers; acrylic rubbers, cellulose derivatives, polyvinyl acetate and poly(α-cyanoacrylate). A suitable amount of thickener is generally about 0.01 to 30% by weight, preferably 5.0 to 25% by weight based on the total weight of the adhesive composition.

Fumed silicas, hydrophobic silicas and certain fumed silica fillers treated with polydialkylsiloxanes or trialkylsilanes as described in US Patent No. 4, 533, 422 Litke may also be usefully employed as cyanocrylate thickeners, e.g., in an amount of 0.01 to 20.0% by weight, preferably 5.0 to 20.0% by weight, based on the total weight of the adhesive composition.

A gelling or solidifying agent may also usefully be employed. One suitable type of gelling or solidifying agent is the product of the ketone condensation reaction between an aldehyde and a polyol.

The aldehyde may be benzaldehyde, 3-chlorobenzaldehyde or 3-fluorobenzaldehyde, especially benzaldehyde. Particularly useful solidifying or gelling agents include those where the polyol is sorbitol, xylitol or mannitol especially sorbitol.

Desirably the gelling or solidifying agent is an acetal of a sugar, particularly an acetal of sorbitol such as dibenzylidene sorbitol.

Desirably the gelling or solidifying agent is at least one aldehyde and/or ketone condensation product with a polyol.

Suitable polyols include those with at least one of a 1,2-diol, 1,3 diol or 1,4 diol structure. The diols may additionally have other groups such as ether, acid, amido, cyano, hemiacetal or halogen. Examples of suitable polyols include 1,2-ethandiol, 1,3-propandiol, 1,2-propandiol, 2,3-butandiol, 1,4-butandiol, 2,2-dimethyl-1,3-propandiol, 2,2-bis(hydroxymethyl)-1,3-propandiol, 2-(bromomethyl)-2-(hydroxymethyl)-1,3-propandiol,1,3,4-butantriol,1-phenyl-1,2,3-propantriol,1,2-hexandiol,neopentylglycol, 1,4-bishydroxymethylcyclohexane, 2-methyl-1,3-propandiol, hexantriol-(1,2,6), 2-(2-hydroxyethoxy)butan-1,3,4-triol, glycerine, di and polyglycerine, diglycerindiacetate, trimethylolpropane, di-(trimethylolpropane), trimethylolethane, pentaerythritol, bicyclo [2.2.1] heptane-2,3,5,6-tetrol, 2,2,3,3-tetrahydroxybutandiacid, dipentaerythritol, sorbitol, formitol, xylitol, inositol, glucitol, glucose, saccharose/sucrose, starch, cellulose, ascorbic acid, partially or fully hydrolysed polyvinylacetate, 9,10-dihydroxy stearic acid methyl ester, diacetylsorbitol and methylglyceride.

Most suitable polyols are sorbitol, xylitol and mannitol, especially sorbitol. These polyols may have additional groups such as ether, ester, amide, cyano and halogen.

Suitable aldehydes or ketones include those which have at least one substituted or unsubstituted aromatic, heteroaromatic or alicylic ring.

Examples of ketones include cyclopentanone, cyclohexanone, cycloheptanone, 1-(3,3-dimethylcyclohexyl)-ethanone, 1-cyclopropylethanone, 3-methyl-5-propylcyclohex-2-en-1-one, dicyclopropylmethanone, 4-tert-butylcyclohexanone, dicyclohexylmethanone, 4-methylcyclohexanone, 1-(1-methylcyclopropyl)-ethanone, (4-chlorophenyl)-cyclopropyl-methanone,1-(1H-pyrrol-2-yl)-ethanone,1-(2,4,6-trimethylphenyl)-ethanone, 1-(2-furanyl)-2-propanone, 1-(2-naphthalenyl)-ethanone, 1-(2-thienyl)-1-propanone, 1 -(4-bromophenyl)-cthanone, 1-(4-methoxyphenyl)-ethanone, 1-(naphthalenyl)-ethanone, 1,1-diphenyl-2-propanone, 1,2-diphenylethanone, 1,3-diphenyl-2-propanone, 1-phenyl-1-butanone, 1-phenyl-1-decanone, 1-phenyl-1-dodecanone, 1-phenyl-1-hexanone, 1-phenyl-1-octanone, 1-phenyl-1-pentanone, 1-phenyl-1-penten-3-one, 1-phenyl-1-tetradecanone, 1-phenyl-2-butanone, 1-phenyl-2-propanone, 1-pyrazinyl-ethanone, 2,2,2-trifluoro-1-phenyl-ethanone, 1-(2-furanyl)-ethanone, 1-(2-pyridinyl)-ethanone, 1-(2-thienyl)-ethanone, 4-chloro-1-(4-fluorophenyl)-1-butanone, 4-phenyl-2-butanone, 1-phenyl-ethanone, bis-(2-hydroxyphenyl)-methanone, bis-(4-chlorophenyl)-methanone, cycloperitylphenylnaethanone, cyclopropyl(4-methoxyphenyl)-methanone, cyclopropyl-(4-methylphenyl)-methanone, cyclopropyl-2-thienyl-methanone, cyclopropylphenyknethanone, 1,5-diphenyl-1,4-pentadien-3-one, phenyl-2-pyridinyl-methanone, 2-bromo-1-(4-nitrophenyl)-ethanone, 2-naphthalenylphenyl-methanone, 3-chloro-1-phenyl-1-propanone, 4-(4-hydroxyphenyl)-2-butanone, 4-(4-methoxyphenyl)-3-buten-2-one, 1-(4-pyridinyl)-ethanone, 1-(4-hydroxyphenyl)-ethanone, 1-phenyl-1-propanone, 4-phenyl-3-buten-2-one, diphenylmethanone, 1-phenyl-2-butanone, 1-phenyl-2-buten-1-one, bis-(4-methylphenyl)-methanone, 2-methyl-1-phenyl-1-propanone, 2-chloro-1-phenyl-ethanone, cyclopropyl-(4-fluorophenyl)-methanone, 1-(p-methoxyphenyl)-2-propanone, cyclohexylphenylmethanone and phenyl-(2-thienyl)-methanone.

The following aldehydes are exemplary for use in the present invention: benzaldehyde, 3-chlorobenzaldehyde, 4-chlorobenzaldehyde, 2,6-dichlorobenzaldehyde, 2,4-dinitrobenzaldehyde, 3,4-dichlorobenzaldehyde, 3-fluorobenzaldehyde, 4-bromobenzaldehyde, 2-methyltetrahydrobenzaldehyde, tetrahydrobenzaldehyde, 2-methyl-5-isopropylcyclopenten-1-aldehyde, 2,2,4-trimethylcyclohexa-4,6-dien-1-aldehyde, 3(4)-methyl-1-propylcyclohexen-3-aldehyde, 1,3(4)-dimethylcyclohexen-3-aldehyde, 2-methyl-1-propylcyclohexen-3-aldehyde, 3-cyclohexen-1-aldehyde, 2,3,4,5,6-pentafluorobenzaldehyde, 2,4,6-trihydroxybenzaldehyde, 4-tolylacetaldehyde, 2-methylbenzaldehyde, 4-hydroxybenzaldehyde, 3-methylbenzaldehyde, 2-hydroxy-1-naphthalaldehyde, 4-methylbenzaldehyde, 3,5-dimethoxy-4-hydroxybenzaldehyde, cinnam-aldehyde, 3-nitrobenzaldehyde, 2-pentylcinnamaldehyde, 4-diethylaminobenzaldehyde, 4-methoxybenzaldehyde, 2-phenylpropionaldehyde, 2-methoxycinnamaldehyde, 4-methylbenzaldehyde, phenoxyacetaldehyde, methylpyrrol-2-aldehyde, 2,5-dimethoxytetrahydrofuran-3-aldehyde, 2,5-dipropyl-3,4-dihydropyran-2-aldehyde, 2,5-diethyl-3,4-dihydropyran-2-aldehyde, 2,5-diisopropyl-3,4 dihydropyran-2-aldehyde, 2,5-dimethyl-3,4-dihydropyran-2-aldehyde, 2,5-dibutyl-3,4-dihydropyran-2-aldehyde, thiophen-3-aldehyde, indol-3-aldehyde, pyridine-3-aldehyde, pyridine-4-aldehyde and n-methylpyrrole-2-aldehyde.

Desirable aldehydes include benzaldehyde, 3-chlorobenzaldehyde and 3-fluorobenzaldehyde.

Particular acetals and ketals include: di-O-benzylidenmannitol, di-O-(2-chlorobenzylidene)mannitol, di-O-(4-nitrobenzylidene)mannitol, di-O-(3-fluorobenzylidene)mannitol, O-benzylidenesorbitol, di-O-benzylidenesorbitoldiacetate, di-O-(2-chlorobenzylidene)sorbitoldiacetate, tri-O-(4-chlorobenzylidene)sorbitol, O-benzylidenethreitol, O-benzylidene tartaric acid methylester, O-cyclohexylidenglycerine, O-cyclohexylidene ascorbic acid and O-benzylidene-9,10-dihydroxy stearic acid methylester.

Suitably the aldehyde is benzaldehyde, 3-chlorobenzaldehyde or 3-fluorobenzaldehyde, especially benzaldehyde. Suitably the polyol is sorbitol, xylitol or mannitol, especially sorbitol. The condensation product may be di-O-benzylidene mannitol; di-O-(3-fluorobenzylidene) mannitol or di-O-benzylidene sorbitol especially di-O-benzylidene sorbitol.

Suitable gelling agents for inclusion in the compositions of the invention include acetals of sugars, particularly acetals of sorbitol, which are particularly effective as gelling agents. One such gelling agent includes di-O-dibenzylidene sorbitol (also referred to simply as dibenzylidene sorbitol) sold by Roquette Freres, France under the trademark Disorbene™ . Other acetals such as those described above have also been found to be useful.

Acetals of sugars, particularly natural sugars, for example acetals of sorbitol, have been previously used as gelling agents for the preparation in stick form and these materials are useful in the present invention.

Suitably the gelling or solidifying agent has a concentration in the composition from about 0.01% to about 20%, such as about 0.01% to about 15%, typically from about 0.05% to about 10% for example about 0.1% to about 5% weight by weight based on the total weight of the composition.

The plasticizers, perfumes, dyes, pigments, etc., may be added depending on use purposes in amounts which do not adversely affect the stability of the α-cyanoacrylate monomer. The use of such additives is within the skill of those practicing in the cyanoacrylate adhesive art and need not be detailed herein.

A cyanoacrylate accelerator may be used in a conventional manner e.g. in an amount of about 0.01 to 5.0% by weight, preferably 0.01 to 2.0% by weight, based on the total weight of the composition. See e.g. U.S. Patents Nos. 4, 170, 585 and 4, 450, 265 incorporated herein by reference.

A plasticizer may also be included in the composition. The plasticizer component can be selected from one or more conventional materials used for this purpose in adhesive compositions provided that the plasticizer is compatible and soluble in cyanoacrylate esters (see GB 1 529 105). Examples include alkyl phthalates, azelates, adipates, sebacates, citrates, phosphates, succinates, benzoates and trimellitates. Desirable plasticizers are glycerol triacetate, dibutyl phthalate, benzylbutyl phthalate, diheptyl phthalate, dibutyl sebacate and diethyleneglycol dibenzoate. Blends of two or more different plasticizers are also beneficial.

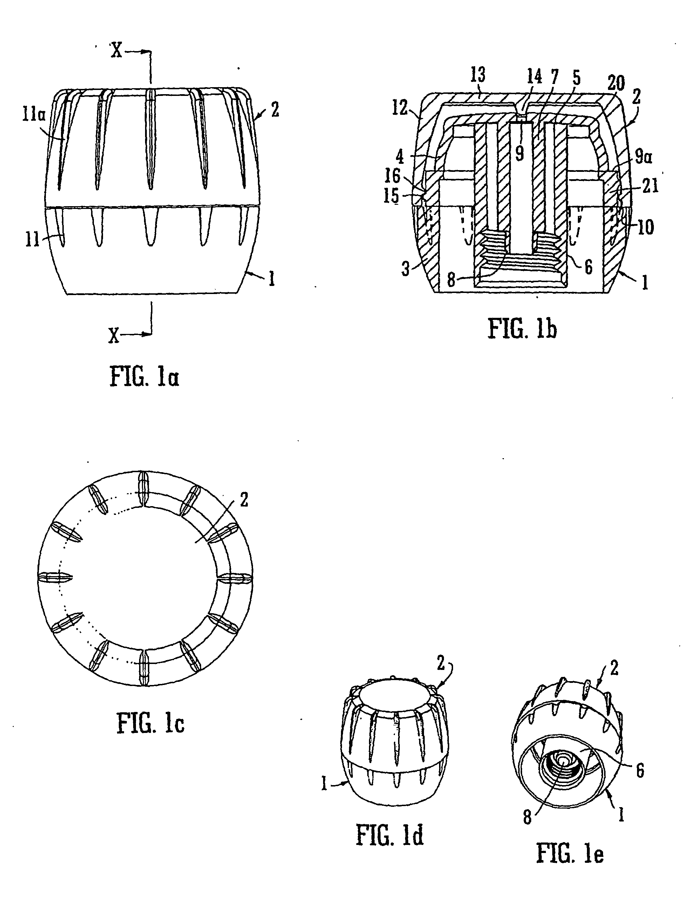

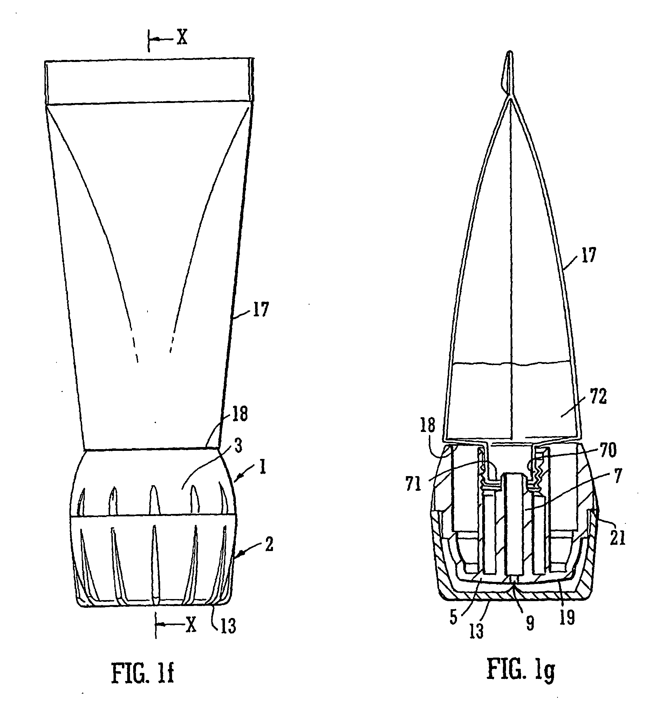

As shown in Figure 1, an applicator 1 for use with a pack according to the invention is provided with a cap 2. The applicator is of moulded plastics material compatible with CA adhesives, and comprises a generally cylindrical hollow body 3, a generally cylindrical neck portion 4 which extends upwardly from the body, and a head 5 which closes the top of the applicator. The head is slightly domed with a dome radius of about 85 mm and the comer at the transition between the neck and the head is rounded with a comer radius of about 1 - 2 mm. The head of the applicator is integral with the body of the applicator as shown in the Figures.

Projecting downwardly from the head and spaced radially inwardly of the body there is a cylindrical hollow receiver 6, the lower part of which is internally screw-threaded. Spaced radially inwardly of the receiver 6, and also projecting downwardly from the head 5 there is a cylindrical hollow passage member 7 which at its open lower end thins down to form a cutting ring 8.

The centre of the head 5 is penetrated by a (valveless) dispensing aperture 9 which provides an outlet from the interior of the passage member 7. The passage member 7 defines the conduit for supplying adhesive composition to the dispensing aperture.

The upper portion of the neck 4, adjacent to the rounded comer, is cylindrical. The lower portion of the neck 4 is also cylindrical and is connected to the upper portion by a convex flared portion. There is an annular step 9a at the transition between the neck 4 and body 3. This inhibits flow of adhesive composition downwardly providing flow inhibition means on the exterior of the applicator. There is a further annular step 10 a part of the way down the body 3. If desired, a lip (not shown) may be provided at the outer edge of the step 9a. Below the step 10 the body has an outer surface which curves radially inwardly. The upper part of this curved surface carries a series of nibs 11 which facilitate manual gripping.

The cap 2 comprises a skirt 12 and a top portion 13. The skirt 12 fits on the upper part of the body of the applicator, with its edge resting on the step 10. The cap engages on the applicator by screw thread engagement between respective rib formations 15 and 16, allowing a one-quarter turn release. The engagement is effective to seal the cap and applicator together. The cap 2 closes over the applicator 1 but leaves a gap between the two components to minimise the risk of bonding between them. The external surface of the top portion 13 is flat. At the centre of the top portion 13 of the cap there is a downwardly projecting pin 14 which fits into the dispensing aperture 9 and seals it. The pin does not extend fully through the aperture to reduce the likelihood of bonding. The pin may be integrally moulded in the cap or it may be a metal insert secured in the cap. The exterior of the cap 2 carries a series of ribs 11a which in the engaged position of the cap 2 are aligned with the ribs 11 on the applicator 1, again for the purpose of facilitating manual gripping. The cap 2 may conveniently be made of transparent, translucent or opaque plastics material, particularly a CA-compatible material.

Figures 1(f) and 1(g) show the applicator mounted on a conventional flexible aluminium or plastics tube 17 suitable for holding an adhesive composition (e.g. in an amount of 5-20g). The tube 17 has an externally screw-threaded outlet 70 which is engageable in the internally screw-threaded portion of the receiver 6 of the applicator.

The shoulder portion 18 of the tube 17 abuts against the body of the applicator. The outlet 70 of the tube before use is sealed by a metal membrane 71, which is pierced by the cutting ring 8 on the passage member 7 as the applicator is screwed down onto the tube. The interior of the tube is then placed in communication with the interior of the passage member 7 so that the adhesive composition can be urged towards the dispensing aperture 9 by squeezing the walls of the tube. The adhesive emerges onto the domed surface 19 of the applicator. It can then be spread across a substrate in a band which can be as wide as the diameter of the head 5 of the applicator. Because of the domed shape of the surface 19 the area of contact between the applicator and the substrate is minimised, thus reducing the risk of sticking when the adhesive cures instantly or very rapidly, and reducing the area of frictional contact.

Adhesive which may unintentionally pass around the comer 20 is held by the step 9a so that it does not reach the upper part 21 of the body, where the cap will fit after use of the applicator. Thus the risk of the cap becoming adhered to the applicator is minimised. If necessary, the applicator can be wiped after use, for example by means of a paper tissue.

Figures 1(f) and 1(g) are shown with the dispensing unit in inverted position compared to Figures 1(a) and 1(b). Because of the flat surface of the top portion 13 of the cap, the unit can conveniently be left standing in this position, with the result that the adhesive composition 72 remains in the region of the outlet 70 and passage member 7 and is immediately available to be dispensed on the next occasion when the unit is used.

For simplicity, the screw engagement between the cap and applicator is not shown in Figure 1(g). A snap-fit engagement would also be possible. Instead of a one-quarter turn release as described above, it is of course possible to use a continuous screw thread which requires eg. a 360 degree turn.

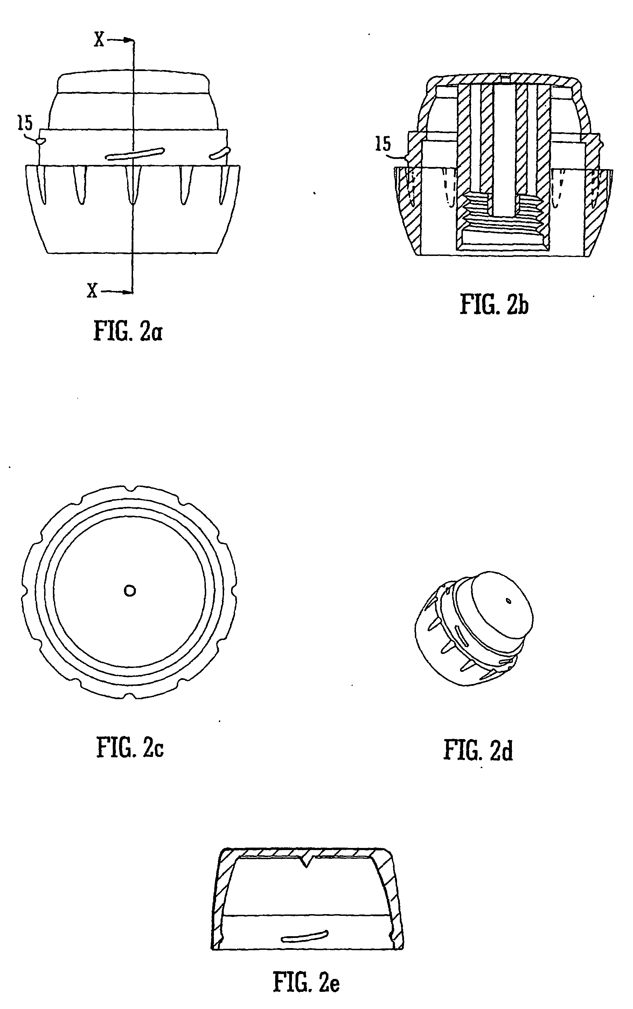

Figure 2 shows the applicator with the cap removed albeit in this case an applicator adapted for mounting on a different size of tube. Figures 2(a) to 2(c) correspond to the views of Figures 1(a) to 1(c). Figures 2(d) shows a perspective view of the applicator while Figure 2(e) shows a sectional view of the cap alone.

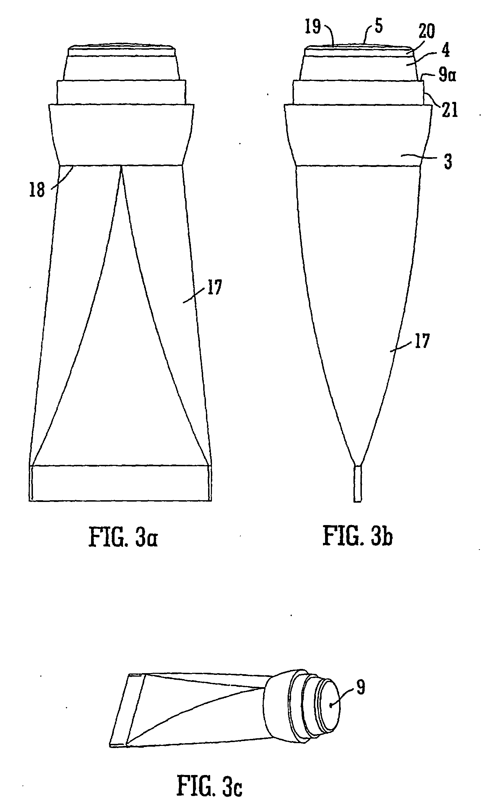

Figure 3 shows an applicator similar to that of Figure 1 with a dome radius of about 68 mm. The applicator is mounted on a tube 17 suitable for holding an adhesive composition (e.g. in an amount of 5-20g).

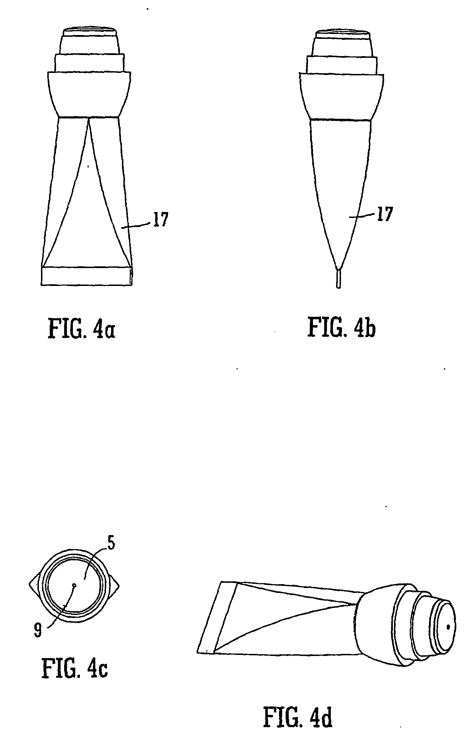

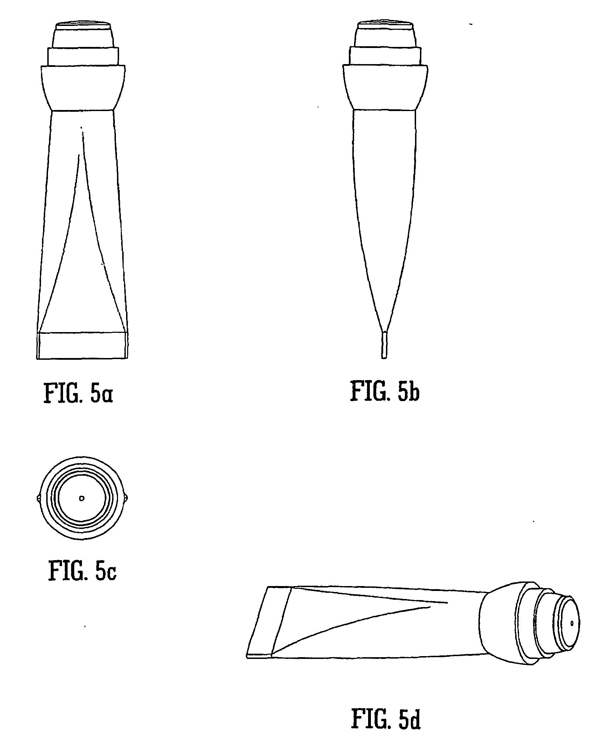

Figures 4 and 5 show similar features to Figure 3 but with smaller tubes e.g. for 5-10g adhesive in Figure 4 and 2-5g adhesive in Figure 5. In these figures the dome radius is about 20 - 30 mm.

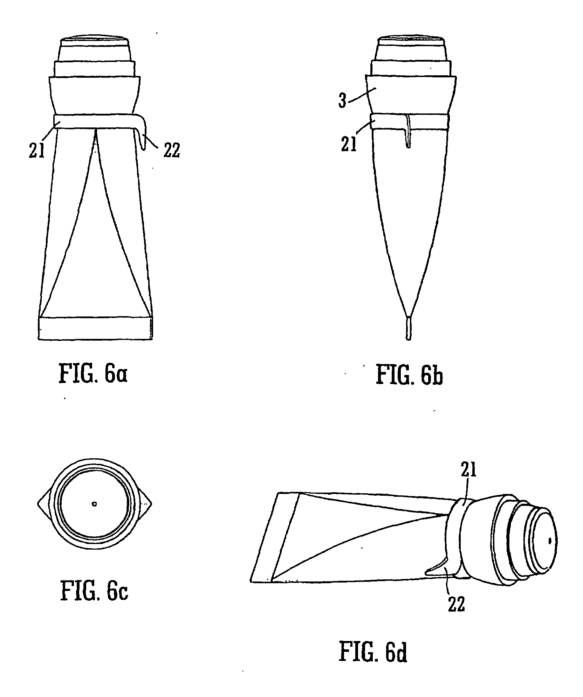

Figure 6 shows an alternative embodiment having a tear band 21 attached to the lower edge of the body 3 of the applicator. The tear band 21 has an internal diameter smaller than the tube 17 at its shoulder 18, and a height sufficiently large so that the applicator cannot be screwed down onto the tube sufficiently for the cutting ring 8 to pierce the membrane of the tube outlet. The tear band 21 has a tab 22 by which it can be gripped and torn away from the applicator. Only when the tear band has been removed can the tube outlet be pierced to supply adhesive to the top surface.

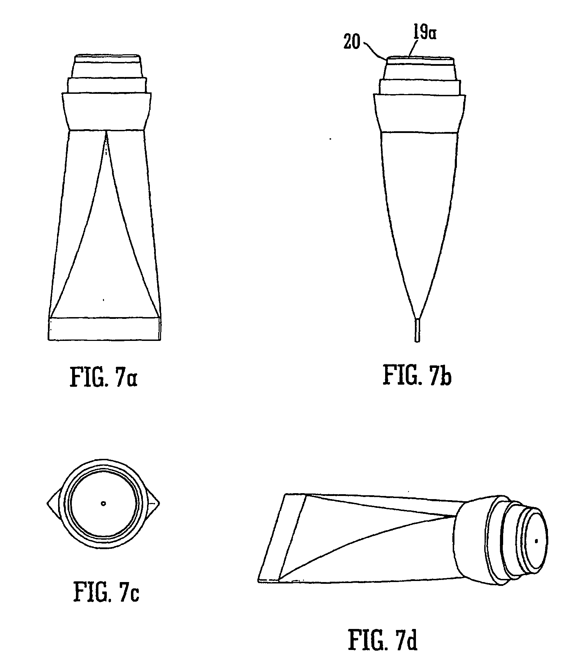

Figure 7 shows a further alternative embodiment in which the surface 19 of the top portion 5 is substantially plane but the comer 20 is rounded as in the previous embodiments. The plane surface permits satisfactory spreading of the adhesive onto a substrate.

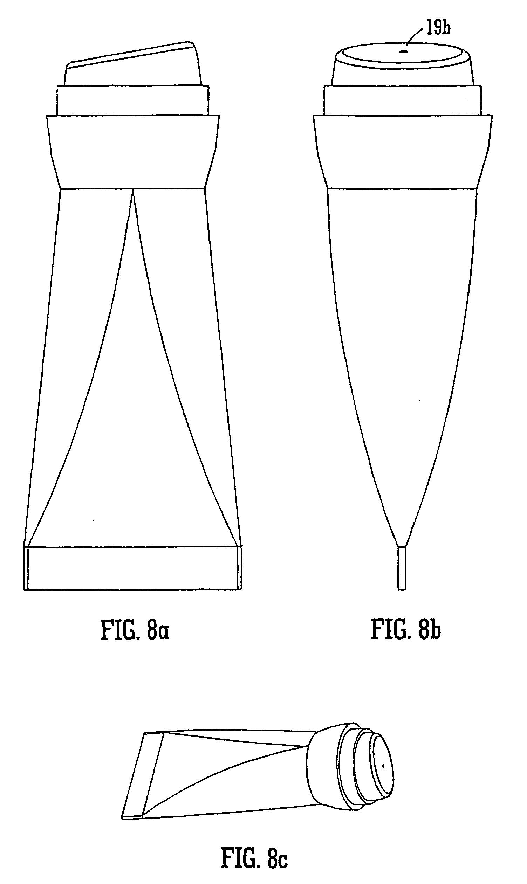

Figure 8 shows an embodiment similar to that of Figure 7 except that the top surface 19b of the applicator is not perpendicular to the axis of the applicator (and more importantly the axis of the tube which is the adhesive container) but is inclined thereto at an angle of about 5-20 degrees. This inclined surface facilitates the holding of the unit in a user's hand during the spreading of the adhesive in a band along a substrate. The surface 19b may be either plane or domed as in previous embodiments. Because of the inclined spreading surface, the uncapped unit cannot stand on the substrate, which reduces the risk of bonding between the applicator and the substrate.

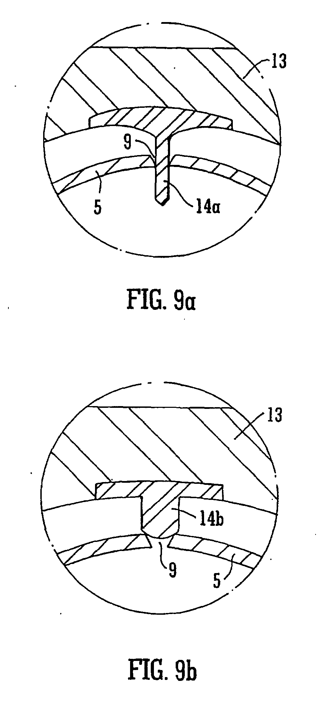

Figure 9 comprises fragmentary enlarged sectional views of two alternative forms of pin 14, shown as metal inserts retained in the top portion 13 of the cap 2, although the pins could also be of plastics material and could be integrally moulded into the cap.

In Figure 9(a), the pin 14a is thin and elongated. In the sealed position (as shown) the pin 14a projects fully through the dispensing aperture. The use of this form of pin would assist in cleaning adhesive from the dispensing aperture.

It will be appreciated that in all of the embodiments described above the applicator and applicator/cap assembly are shown as being attachable to a tube or other such separate container. The separate container is in all cases deformable, allowing for manual expression of the (viscous) contents of the container through the applicator. It will be appreciated that the applicator could be integrally formed with a container such as described below. However it is desirable that the applicator is attachable to an existing container and particularly by screw-thread engagement.

In Figure 9(b), the pin 14b is short and broad. It does not travel through the aperture 9, but enters it partially. The pin 14b has a domed end which seals against a seat surrounding the aperture 9.

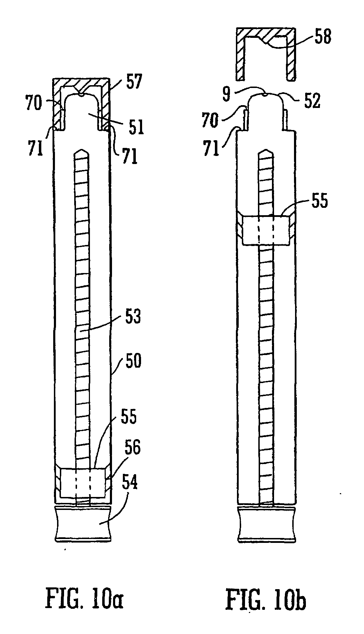

Figure 10 shows two views of an alternative embodiment of the invention in which the applicator is integrated into the container. The container 50 is a rigid cylindrical shell which is closed at the top by an applicator portion 51 having a domed head 52 similar to the applicator of the previous embodiments. There is a dispensing aperture 9 in the centre of the domed head.

There is a screw-threaded spindle 52 inside the container and a knob 54 at the bottom of the container, connected to the spindle. A piston 55 which is internally screw-threaded is mounted on the spindle. The piston carries wipers or 0-rings 56.

A cap 57 fits over the applicator and is screw-engageable therewith. There is a pin 58 on the cap which seals the aperture 9. A step 70 provides an anti-foul or adhesive retention means utilising the movement of adhesive onto the step 71 against which the cap 57 abuts in the closed configuration.

In the position shown in Figure 10(a), adhesive composition is held in the container, above the piston. The cap pin provides a primary seal and the cap interior provides a secondary seal, while the piston wipers or 0-rings provide an underside seal. By turning the spindle anti-clockwise, the piston and adhesive composition are pushed upwards towards the position shown in Figure 10(b), thus supplying the composition to the dispensing aperture 9. The composition is expelled through the aperture 9 and can be spread by the domed surface of the head 52.

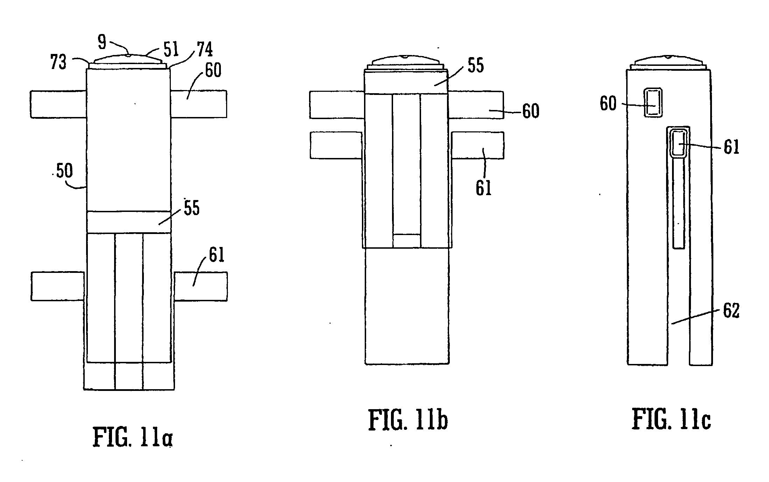

Figure 11 shows 3 views of a further embodiment which is similar to that of Figure 10 except that the rotating spindle delivery mechanism is replaced by a squeezing mechanism. Similar to the earlier Figures an adhesive retention rim or step 73 is provided so as to prevent adhesive fouling the step 74 against which a cap of the container abuts in a closed configuration.

Near to the top of the container 50 there is a pair of fixed lugs 60 projecting sidewardly from the container. Inside the container there is a piston 55 which is connected to a pair of moveable lugs 61 which project from the same sides of the container as fixed lugs 60, through opposed slots 62. By squeezing the two pairs of lugs together, the piston is caused to move from the position of Figure 11(a) to that of Figure 11(b), thus dispensing adhesive composition through the applicator portion 51.

Other forms of containers can also be used. For example, a glue-stick type of container can be modified to receive a screw-engageable applicator of the kind shown in Figures 1-8.

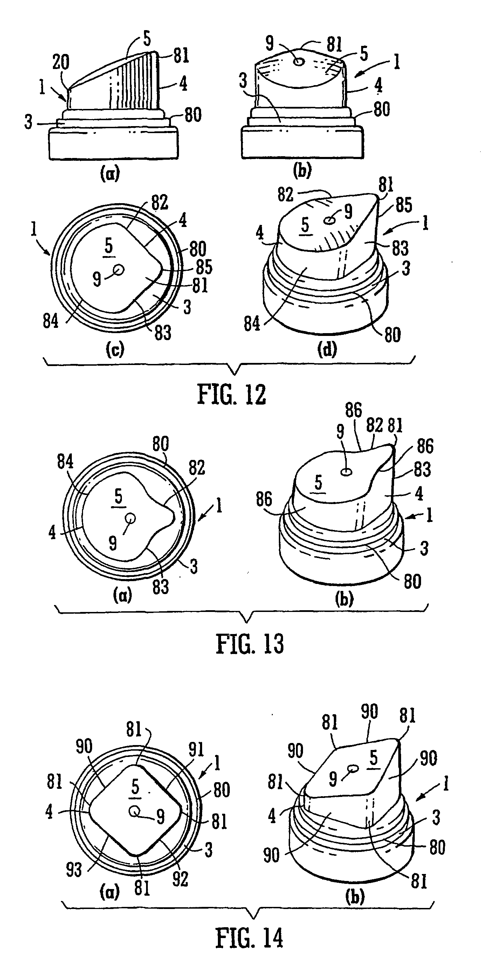

Figures 12 to 14 show further embodiments of the applicator of the pack of the invention. The applicator is shown by itself for the purposes of illustration but it will be appreciated that the applicator could additionally have one or more of the features described above, for example it could be fitted with a cap as described above, with ribs which assist manual gripping, with a tear-away strip etc. It is desired that the spreading surface is inclined and is domed (as shown in Figures 12-14 but which is most evident from Figure 12(a)). It will be appreciated that the head/spreading surface may be flat (a dome of infinite radius) and straight (non-inclined). These however are desirable features such as described below.

As with the previous embodiments the applicators shown are for dispensing viscous adhesive composition such as those described herein. In each embodiment of Figures 12-14 (as with the embodiments described above) the applicator 1 comprises a hollow body 3, a neck portion 4 which extends upwardly from the hollow body and a head 5 which closes the top of the applicator. The head 5 is slightly domed in each of Figures 12 to 14 but the domed shape is most evident from the view of Figure 12(a). The head has a dome radius of about 85 mm and the comer 20 at the transition between the neck and the head is rounded with a comer radius of about 1- 2 mm. In common with the earlier embodiments the applicator may have a hollow receiver which would be very similar in configuration to the receiver 6 shown in earlier Figures (see for example Figure 1(b)).

The center of the head of the applicator is penetrated by a dispensing aperture 9 which provides an outlet for the adhesive composition and functions as described above. A cap such as is shown in Figure 2(e) may be fitted to the applicators. The applicators are adapted for fitting to a conventional deformable adhesive tube.

Each applicator 1 is provided with means for inhibiting flow of adhesive composition along the exterior of the applicator. In each embodiment of applicator of Figures 12-14 this takes the form of a step or rim 80.

The main purpose of providing Figures 12 to 14 is to illustrate the various types of non-porous spreading surface that can be provided and in particular the various shapes of applicator that may prove useful in practice for example for application of narrow bands of material e.g. for application of adhesive to substrates with relatively narrow areas for example comers etc.

The views of Figures 12(a) to 12(d) show a first type of applicator head. In this embodiment the head 5 of the applicator and indeed the neck portion 4 are irregularly shaped. In particular the applicator head 5 and the neck portion 4 have a protruding portion 81 forming an extremity or comer. The presence of the protruding portion is to contrast with a general round (e.g. circular or elliptical shape cross-sectional shape such as the generally cylindrical shape shown in the earlier figures) which is not provided with a protruding portion. It will be appreciated that the protruding portion may be formed as part of the head 5 and not part of the (neck portion 4) of the applicator 1. It is desirable however that the neck portion 4 and the head 5 are similarly shaped and thus it is desirable that as shown that the protruding portion is not only arranged to form part of the spreading surface of the head 5 but also to form part of a neck portion 4 of the applicator 1.

It will be noted that the aperture 9 is generally centrally located on the head 5 and that the alternative shape of the applicator provides at least one portion with a relatively large transverse dimension (for the application of a relatively wide band of adhesive) which in the embodiment shown is the transverse width of the head across the aperture. The applicator also has at least one portion (the protruding portion) of relatively narrow transverse width (taken in the same direction as, normally parallel to, the transverse width measurement of the portion of the applicator for applying the broad band of material) for applying a narrower band of material. The protruding portion or comer 81 can also be considered an integral wedge forming a wedge area on the head of the applicator. This wedge area formed by two edges (of the spreading surface) coinciding at a point (and converging toward that point) allows product to be applied in areas that are otherwise difficult to access. The unit can thus be used to apply adhesive on large surface areas and also smaller amounts/drops of adhesive on smaller more intricate zones.

In application of adhesive the protruding portion 81 can form the leading portion of the applicator when it is desired to apply adhesive in narrower bands or in hard to access areas. In the embodiment the portion 81 is formed by two convergent edges or sidewalls 82,83 on the applicator and in particular forming part of the neck portion 4 of the applicator. The sidewalls converge in a general v arrangement, meeting at a rounded apex 85. The remainder of the neck portion 4 forms a part-cylindrically shaped (in the embodiment semi-cylindrical) portion 84.

A further variation is shown in Figure 13. (For clarity all of the features of the applicator are not renumbered in Figures 13 and 14). As described above the configuration is similar in all material aspects except that the sidewalls 82,83 which converge to a rounded apex 81, each are curved inwardly toward the applicator, defining concave or recessed portions 86 which may further enhance the accessibility of the protruding portion 81 to confined or narrow areas. The broader surface area about the aperture toward the center of the applicator head 5 still allows for the application of broader bands of adhesive as desired and provides a broad receptive platform for receiving adhesive expressed through the aperture 9.

A yet further embodiment is illustrated in Figure 14. In this embodiment the applicator has a generally square neck portion 4 and head 5. As is the case also for the embodiments of Figures 12 and 13 the head 5 is inclined. This allows for ease of manual application of adhesive as the applicator or a container to which it may be fitted may be held at an angle to the surface to which it is to be applied allowing for a more natural poise. The neck portion 4 has four walls 90 generally arranged in a rectangular configuration and meeting to form four rounded apices or comers 91.

The packs in accordance with the invention are for use in dispensing high-viscosity adhesive compositions, more especially cyanoacrylate compositions, suitably in the form of a non-flowable gel. The following examples illustrate cyanoacrylate compositions which can be dispensed by the applicator. Examples 1-3 also describe compositions which can be solidified in a desired geometric form, for example in a cylindrical shape or "stick". They have rheological properties such that they can be expelled from a glue-stick type package but elastic properties such that they can be retracted easily and cleanly.

Test methods for bonding strength and fixture times (bonding speed) were consistent with APTM D 1002 and DIN EN 1465.

### Examples

### Example 1:

| | **Weight %** |
|---|---|
| Ethylcyanoacrylate | 77.997 |
| Methanesulphonic acid | 0.001 |
| Sulphur dioxide | 0.002 |
| Hydroquinone | 0.5 |
| Polymethylmethacrylate Thickener | 16.0 |
| Accelerator | 0.5 |
| Silica | 5.0 |

- Rheology:: Yield point = 16.91 Pa
Casson viscosity = 12250 mPas
- Adhesive properties:: Paper fixture = <3 seconds

### Example 2:

| | **Weight %** |
|---|---|
| Ethylcyanoacrylate | 78.997 |
| Methanesulphonic acid | 0.001 |
| Sulphur dioxide | 0.002 |
| Hydroquinone | 0.5 |
| Polymethylmethacrylate Thickener | 10.0 |
| Accelerator | 0.5 |
| Silica | 10.0 |

- Rheology:: Yield point = 20.247 Pa
Casson viscosity = 4331 mPas
- Adhesive properties:: Paper fixture = <3 seconds

The bond strengths of the composition of this example on various substrates was compared with those of an emulsion-type adhesive as sold under the trade name PrittStick™.

| | Example 2 | Pritt Stick |
|---|---|---|
| Grit-blasted mild steel | 173 ± 1.6 | 0 |
| Polycarbonate | 3.26 ± 4.45 | 0 |
| Yellow pine | *5.75 ± 1.6 | *2.08 ± 0.27 |
| All bonds were allowed to cure for 24 hours at room temperature Values given in N/mm² | | |

| | | |
|---|---|---|
| * In all cases the substrate failed before the adhesive | | |

### Example 3:

| | **Weight %** |
|---|---|
| Ethylcyanoacrylate | 73.997 |
| Methanesulphonic acid | 0.001 |
| Sulphur dioxide | 0.002 |
| Hydroquinone | 0.5 |
| Polymethylmethacrylate Thickener | 10.0 |
| Accelerator | 0.5 |
| Silica | 15.0 |

- Rheology:: Yield point = 4.23 Pa
Casson viscosity = 7844 mPas
- Adhesive properties:: Paper fixture = <3 seconds

Examples 4-8 below describe compositions which are particularly suitable for use with an applicator according to the invention having a closed head and a dispensing aperture penetrating the head.

All parts are in weight %.

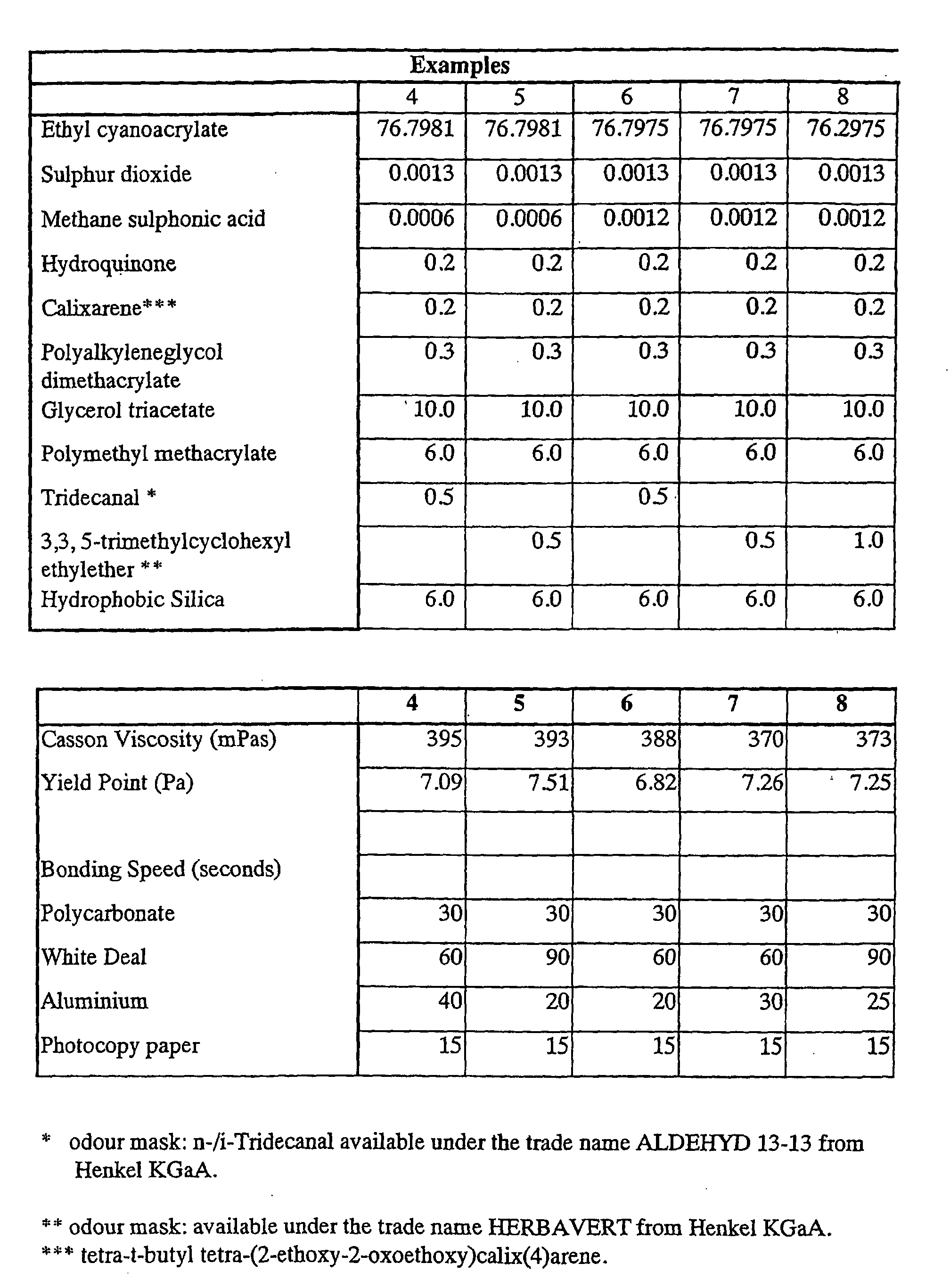

Bonding speed is defined as the minimum time required for a bonded assembly having a bond area of 322.6 mm² to support a weight of 3 kilos.
Drying Time

| Formula | 4 | 5 | 6 | 7 | 8 |
|---|---|---|---|---|---|
| Drying Time (mins) | 15 | 15 | 40 | 35 | 35 |
| A standard commercial gel product took 8 minutes to dry in the same test. | | | | | |

- Approximately the same film thickness was used for each formulation.
- Drying time was measured as the time taken for the adhesive film to become dry to touch (non-tacky).

The words "up", "down", "upper", "front", "rear" and the like used herein refer to the orientation of the dispensing unit as shown in the related drawings and do not describe the working position of the unit. Such terms are used without limiting effect.

The words "comprises/comprising" and the words "having/including" when used herein with reference to the present invention are used to specify the presence of stated features, integers, steps or components but does not preclude the presence or addition of one or more features, integers, steps, components or groups thereof.

Although the invention has been described above, many modifications and equivalents thereof will be clear to those persons of ordinary skill in the art and are intended to be covered hereby, ie whithin the scope of the invention as defined by the claims.

## Claims

1. A pack comprising:
(i) a container [17, 50] holding a viscous adhesive composition [72];
(ii) an applicator [1, 51] for dispensing a viscous adhesive composition [72] onto a substrate from the container [17, 50], said applicator [1, 51] having a body [3] with a closed head [5, 52], a sealable valveless dispensing aperture [9] penetrating the head, conduit or delivery means to supply the adhesive composition to the dispensing aperture [9], a wide non-porous spreading surface [19, 19B] on the exterior of the head [5, 52] around the dispensing aperture [9], and means for inhibiting flow of adhesive compositions along the exterior of the applicator, said means for inhibiting flow of adhesive compositions comprising an annular step [9a, 73, 80] positioned a part of the way down the body, to which body a cap [2, 57] is attachable.

2. A pack according to claim 1 wherein the spreading surface [19, 19B] of the applicator [1, 51] is dome-shaped.

3. A pack according to claim 1 or claim 2 wherein the head [5, 52] of the applicator [1, 51] has a corner [20] at the perimeter of the spreading surface [19, 19B].

4. A pack according to claim 3 wherein the applicator corner [20] is curved.

5. A pack according to claim 3 or claim 4 wherein the applicator corner [20] runs from the head [5, 52] toward the body [3].

6. A pack according to any one of claims 3 to 5 wherein the applicator corner [20] runs about the entire perimeter of the spreading surface [19, 19B].

7. A pack according to any one of claims 3 to 5 wherein the applicator corner [20] is formed by the convergence of two edges of the spreading surface [19, 19B].

8. A pack according to any one of claims 3 to 7 wherein the applicator corner [20J is also formed in the body [3] of the applicator [1, 51].

9. A pack according to any of the preceding claim wherein the spreading surface [19, 19B] or applicator [1, 51] is of a generally rectangular shape or is generally wedge-shaped.

10. A pack according to any of the preceding claims in combination with a cap [2, 57] which fits over the head [5, 52] and which has a structure [14, 14A, 14B, 58] inside the cap [2, 57] for engaging the dispensing aperture [9] so as to close the aperture [9].

11. A pack according to any of the preceding claims having complementary engagement means on the applicator [1, 51] and the container [17, 50] respectively.

12. A pack according to any one of the preceding claims wherein the applicator [1,51] has cutting means [8] for piercing a closure [71] on the container [17, 50] during the course of inter-engagement of the engagement means [6, 70].

13. A pack according to any one of the preceding claims wherein the container [17, 50] holds an alpha-cyanoacrylate adhesive composition with a Casson Infinite Shear Viscosity in the range of 300 - 50,000 mPa.s and a Yield Point in the range 1-20 Pa.

14. A pack according to claim 13 wherein the adhesive composition is a gel.

15. A pack according to any one of claims 13 or claim 14 wherein the adhesive composition includes an odour masking ingredient compatible with the composition.

## Patentansprüche

1. Verpackung, umfassend:
(i) einen Behälter (17, 50), der eine viskose Klebstoffzusammensetzung (72) enthält;
(ii) einen Applikator (1, 51) zur Abgabe einer viskosen Klebstoffzusammensetzung (72) aus dem Behälter (17, 50) auf ein Substrat, wobei der Applikator (1, 51) aufweist: einen Körper (3) mit einem verschlossenen Kopf (5, 52), eine abdichtbare ventillose Abgabeöffnung (9), die den Kopf durchdringt, Kanal- oder Abgabeeinrichtungen zur Zufuhr der Klebstoffzusammensetzung zur Abgabeöffnung (9), eine weite nichtporöse Auftragsoberfläche (19, 19B) auf dem Äußeren des Kopfs (5, 52) um die Abgabeöffnung (9) und Einrichtungen zum Hemmen eines Stroms von Klebstoffzusammensetzungen entlang dem Äußeren des Applikators, wobei die Einrichtungen zum Hemmen eines Stroms von Klebstoffzusammensetzungen eine ringförmige Stufe (9a, 73, 80) umfassen, die ein Stück des Wegs den Körper hinunter positioniert ist, an welchem Körper eine Kappe (2, 57) anbringbar ist.

2. Verpackung nach Anspruch 1, bei der die Auftragsoberfläche (19, 19B) des Applikators (1, 51) kuppelförmig ist.

3. Verpackung nach Anspruch 1 oder Anspruch 2, bei der der Kopf (5, 52) des Applikators (1, 51) eine Kante (20) am Perimeter der Auftragsoberfläche (19, 19B) aufweist.

4. Verpackung nach Anspruch 3, bei der die Applikatorkante (20) gekrümmt ist.

5. Verpackung nach Anspruch 3 oder Anspruch 4, bei der die Applikatorkante (20) vom Kopf (5, 52) in Richtung auf den Körper (3) verläuft.

6. Verpackung nach einem der Ansprüche 3 bis 5, bei der die Applikatorkante (20) um den ganzen Perimeter der Auftragsoberfläche (19, 19B) verläuft.

7. Verpackung nach einem der Ansprüche 3 bis 5, bei der die Applikatorkante (20) durch das Zusammenlaufen von zwei Rändern der Auftragsoberfläche (19, 19B) gebildet ist.

8. Verpackung nach einem der Ansprüche 3 bis 7, bei der die Applikatorkante (20) auch im Körper (3) des Applikators (1, 51) gebildet ist.

9. Verpackung nach einem der vorangehenden Ansprüche, bei der die Auftragsoberfläche (19, 19B) oder Applikator (1, 51) von einer im Allgemeinen rechteckigen Form ist oder im Allgemeinen keilförmig ist.

10. Verpackung nach einem der vorangehenden Ansprüche in Kombination mit einer Kappe (2, 57), die über den Kopf (5, 52) passt und die eine Struktur (14, 14A, 14B, 48) im Innern der Kappe (2, 57) zum Eingriff mit der Abgabeöffnung (9) aufweist, um die Öffnung (9) zu verschließen.

11. Verpackung nach einem der vorangehenden Ansprüche, die komplementäre Eingriffseinrichtungen auf dem Applikator (1, 51) bzw. dem Behälter (17, 50) aufweist.

12. Verpackung nach einem der vorangehenden Ansprüche, bei der der Applikator (1, 51) eine Schneideinrichtung (8) zum Durchbohren eines Verschlusses (71) auf dem Behälter (17, 50) während des Verlaufs eines Ineinandergreifens der Eingriffseinrichtungen (6, 70) aufweist.

13. Verpackung nach einem der vorangehenden Ansprüche, bei der der Behälter (17, 50) eine Alpha-Cyanoacrylatklebstoffzusammensetzung mit einer Casson-Unendlichscherviskosität im Bereich von 300-50000 mPa.s und einer Fließgrenze im Bereich 1-20 Pa enthält.

14. Verpackung nach Anspruch 13, bei der die Klebstoffzusammensetzung ein Gel ist.

15. Verpackung nach einem der Ansprüche 13 oder Anspruch 14, bei der die Klebstoffzusammensetzung einen Geruchsmaskierungszusatzstoff enthält, der mit der Zusammensetzung verträglich ist.

## Revendications

1. Dispositif d'application comportant :
(i) un récipient [17, 50] contenant une composition adhésive visqueuse [72],
(ii) un applicateur [1, 51] pour distribuer une composition adhésive visqueuse [72] sur un substrat à partir du récipient [ 17, 50], ledit applicateur [1,51] ayant un corps [3] muni d'une tête fermée [5, 52], une ouverture de distribution sans clapet pouvant être rendue étanche [9] pénétrant dans la tête, un conduit ou des moyens d'alimentation pour acheminer la composition adhésive jusqu'à l'ouverture de distribution [9], une large surface d'enduction non-poreuse [19, 19B] sur l'extérieur de la tête [5, 52] autour de l'ouverture de distribution [9], et des moyens pour empêcher un écoulement de compositions adhésives le long de l'extérieur de l'applicateur, lesdits moyens pour empêcher un écoulement de compositions adhésives comportant un gradin annulaire [9a, 73, 80] positionné sur une partie du trajet vers le bas du corps, lequel corps pouvant être relié à un couvercle [2, 57].

2. Dispositif d'application selon la revendication 1 dans lequel la surface d'enduction [ 19, 19B] de l'applicateur [1,51] a une forme de dôme.

3. Dispositif d'application selon la revendication 1 ou 2 dans lequel la tête [5, 52] de l'applicateur [1, 51] a un coin [20] sur le périmètre de la surface d'enduction [ 19, 19B].

4. Dispositif d'application selon la revendication 3 dans lequel le coin d'applicateur [20] est incurvé.

5. Dispositif d'application selon la revendication 3 ou 4 dans lequel le coin d'applicateur [20] s'étend à partir de la tête [5, 52] en direction du corps [3].

6. Dispositif d'application selon l'une quelconque des revendications 3 à 5 dans lequel le coin d'applicateur [20] s'étend autour du périmètre entier de la surface d'enduction [19, 19B].

7. Dispositif d'application selon l'une quelconque des revendications 3 à 5 dans lequel le coin d'applicateur [20] est formé par la convergence de deux bords de la surface d'enduction [19, 19B].

8. Dispositif d'application selon l'une quelconque des revendications 3 à 7 dans lequel le coin d'applicateur [20] est également formé dans le corps [3] de l'applicateur [1,51].

9. Dispositif d'application selon l'une quelconque des revendications précédentes dans lequel la surface d'enduction [19, 19B] de l'applicateur [1, 51] a une forme généralement rectangulaire ou a généralement une forme de coin.

10. Dispositif d'application selon l'une quelconque des revendications précédentes en combinaison avec un couvercle [2, 57] qui s'adapte au-dessus de la tête [5, 52] et qui a une structure [14, 14A, 14B, 58] à l'intérieur du couvercle [2, 57] pour venir en prise avec l'ouverture de distribution [9] de manière à obturer l'ouverture [9].

11. Dispositif d'application selon l'une quelconque des revendications précédentes ayant des moyens complémentaires de mise en prise avec l'applicateur [1, 51] et le récipient [ 17, 50] respectivement.

12. Dispositif d'application selon l'une quelconque des revendications précédentes dans lequel l'applicateur [1, 51] a des moyens de coupe [8] pour percer une fermeture [71] sur le récipient [17, 50] au cours de la mise en prise mutuelle des moyens de mise en prise [6, 70].

13. Dispositif d'application selon l'une quelconque des revendications précédentes dans lequel le récipient [17, 50] contient une composition adhésive d'alpha-cyanoacrylate ayant une viscosité de cisaillement infinie de Casson située dans la plage allant de 300 à 50 000 mPa.s et une limite d'élasticité située dans la plage allant de 1 à 20 Pa.

14. Dispositif d'application selon la revendication 13 dans lequel la composition adhésive est un gel.

15. Dispositif d'application selon l'une quelconque des revendications 13 ou 14 dans lequel la composition adhésive comprend un ingrédient de masquage d'odeur compatible avec la composition.
